# EUROPEAN PATENT APPLICATION

(11) **EP 4 102 362 A1**
(43) Date of publication of application: **14.12.2022**
(21) Application number: 22178225.3
(22) Date of filing: 09.06.2022
(51) Int. Cl.: G06F 9/448

(54) **A RUNTIME ENVIRONMENT AND METHOD FOR CREATING AN EVENT-DRIVEN EXECUTION MODEL OF AN INDUSTRIAL APPLICATION**

(30) Priority: 11.06.2021 US 202163209622 P
(71) Applicant: nxtControl GmbH, 2544 Leobersdorf (AT)
(72) Inventor: MAYER, Horst, 2544 Leobersdorf (AT)
(74) Representative: Plasseraud IP

(57) **Abstract**

The invention relates to a runtime environment for execution of an event driven control program for a distributed control system comprising one or multiple computing resources, wherein the control program comprises at least two function blocks. The runtime environment comprises for each computing resource an event executor which is configured for execution of sets of events and respective associated data on the respective computing resource. And wherein the runtime environment includes for each function block a memory resource, which memory resource is configured to: store a set of events and associated data for each function block if the data is produced by the function block; and/or store a reference to a set of events and associated data for each function block if the data is consumed by the function block.

## Description

The present invention relates to a software engineering tool for modelling of an automation system, and a method for engineering distributed control of an automation system. And more in particular, to a method for event-driven execution of an industrial application for an automation system.

### BACKGROUND

### GENERAL INTRODUCTION - ENGINEERING TOOL

Industrial automation systems are provided to perform, control and supervise industrial processes. For creating the control programs of such systems, software engineering tools are used to model and implement an automation system. These engineering tools may allow the use of program languages such as Structured Text or Ladder Diagram and create application control logic describing the desired functional behavior of the automation system. The functional program may then be compiled to create an executable program that can be executed by the automation system. In order to simulate the behavior of the executable program, engineering tools are further linked with a runtime environment or other kind of execution framework in which the executable program may be executed and/or tested. To facilitate ease of control, during run-time, a Graphical User Interface GUI may display a window that reproduces a human-machine interface as present on the automation system. The human-machine interface of the automation system may actually be a screen displaying buttons, knobs and sliders, wherein the screen may be interacted with by means of a keyboard, keypath, mouse or other user input devices. The screen may also be a touchscreen that can be interacted with by touching with the tip of a finger or stylus pen.

A particular type of programming language, Functional Block Diagram, is a graphical language using function blocks to model and program an automation system. This is described in standard IEC 61131-3, and is dedicated specifically to automation systems using programmable logic controllers. A limitation or downside of the IEC 61131-3 standard is that it focuses on single / stand-alone PLCs. To overcome this and allow or simplify the implementation of a control program over multiple PLCs and/or other programmable processing devices, a further standard IEC 61499 has been introduced aimed at modeling control system applications which can be distributed over several controllers.

### DIFFERENCE OF IEC 61131 & 61499

The IEC 61499 standard addresses a number of topics, including System view, Distribution, Event Driven execution and Encapsulation. A first main difference over IEC 61131-3 is the change from execution based on scan cycles to event-driven execution.

A further difference affects the Function Block. An IEC 61131-3 function block has some function block specific memory that allows to store a state like for example some previous values. This means that the same input may not necessarily produce the same output, depending on the values stored in memory. The memory used for this function block specific memory is part of the global memory of the executing device. Furthermore, this global memory is shared with the function blocks on the same executing device. Since there are no restrictions in terms of access to this memory, each function block state can be manipulated from any other function block or service on the same executing device. Moreover, it means that there is no certain way of ensuring which data is changed at which point in time and by which function block or service on the executing device. As a consequence, transferring such values to other services requires a transfer after each potential change which means after each execution cycle. This consumes bandwidth of the transfer media or CPU utilization for old/new value comparisons to avoid transfer of unchanged values. The change from IEC 61131-3 to 61499 to enable event-driven execution, includes the encapsulation of function blocks. This means that a function block specific memory is no longer shared and can therefore only be changed by the function block algorithm itself. Other function blocks need to trigger those changes of another function block's state over the interface of this function block. Furthermore the introduction of associations between the Events and Data In-/Outputs to synchronize this change of data with the events allow a more granular tracking of changes.

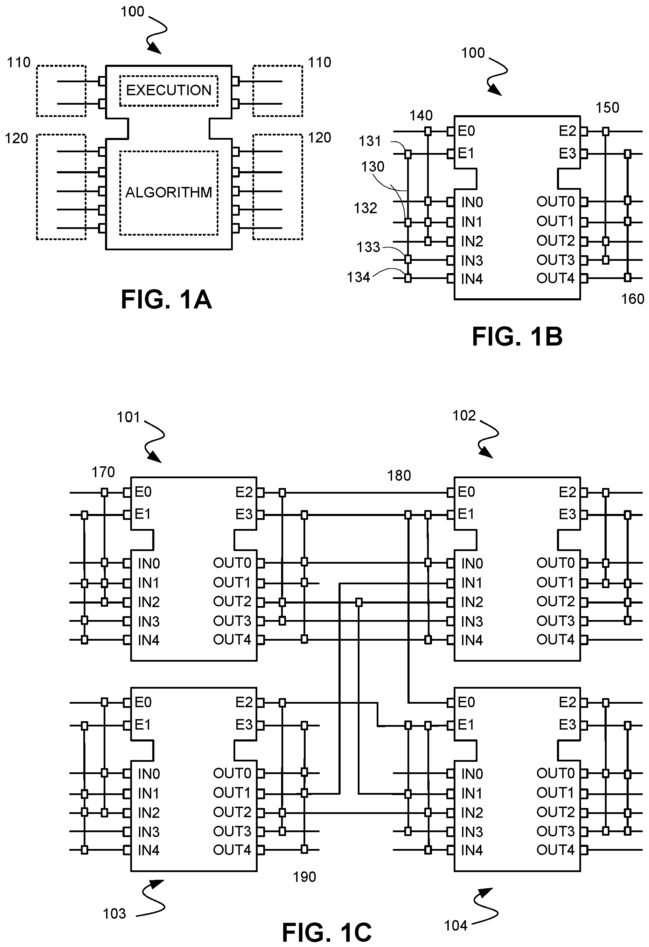

So, as shown in Fig. 1A, in IEC 61499 there is a first communication layer 120 at which the flow of data is arranged and a second communication layer 110 at which the flow of events is arranged. During execution the flow of data and the flow of events in these communication layers needs be synchronized. Fig. 1B schematically illustrates the association of an event destined for event input port E1 and the data inputs for data input ports IN1, IN3 and IN4 by a vertical line 130 with square beads 131-134. Similar associations of event and data are indicated by lines 140, 150 and 160. Events and data are associated to ensure that these are synchronized and to guarantee data integrity.

Encapsulation refers to the fact that each function block executes its' functionality, that is the algorithm and local internal variables, in isolation. So, based on the data inputs and events the Function Block will execute without requiring any further input or reference; acting as a black-box. Such encapsulation allows the black box design, within which different languages or technologies may be used. This is achieved by the use of a generic interface for all function blocks, while allowing the internal function to be defined in whatever programming language suitable and then being compiled into whatever code suitable like machine code suitable for the hardware platform on which the particular function block will eventually be deployed.

### TYPES OF FUNCTION BLOCKS

The function blocks described above are referred to as basic function blocks. Each basic function block includes internal variables, algorithms, and an execution control function defined as an Execution Control Chart ECC. These internal variables are not available or accessible from outside the function block.

Multiple basic function blocks may be connected together to form a composite function block CFB, which may be considered and referred to as a single entity. A composite function block may comprise an adapter in order to present input and output events and input and output data in a coherent manner.

A third type of function block is a Service interface function block SIFB, which may encapsulate functions, like particular hardware dependent functions, or services which interface with Runtime external Systems like, such as those related to a Graphical User Interface GUI, or communication services relating to Data Exchange via communication protocols like OPC UA, DDS and BD Access or relating to Fieldbus /IO Systems like EtherCAT, Profibus, KNX, and Modbus, and relating to Technologies or systems for simulation, analytics and model driven control. More in general, a Service interface function block may be classified in two categories: communication function block or management function block.

### ENGINEERING TOOL-SYSTEM MODELING

An engineering tool may use the function blocks described above as bricks for building a network of function blocks that provides/implements a functional model of an industrial system. Thereto, the engineering tool includes libraries that contain generic function block types, from which instances are used to build the network and create an application. This network of function blocks is referred to as an application. The application allows to describe a system configuration in the form of a distributed system of communicating resources that may be deployed on devices. Herein, a device represents a programmable device such as a programmable Logic Controller PLC, a Programmable Automation Controller PAC, or other type of processing device, which may include virtual devices like a Virtual Machine or Containers.

A resource is like an execution container that acts and operates independently. It may accept data and/or events from its' environment, such as sensors and from communication interfaces, processes and returns data and/or events. With the engineering tool each resource is populated by a network of function blocks, which basically can be seen as components calling each other and passing data in between.

One device may host/support multiple resources, as e.g. multiple tasks within a single processor with a multitasking operating system. Multiple resources on a single device may also be supported as threads binded to cores of a multicore processor or by multiple processors connected to a single backplane. The use of resources enables to deploy an application across multiple resources within a device or over several devices. As the resources need not be fixedly linked to one single particular device, this is key for enabling distribution in a flexible manner.

Another advantage of this approach is that the application i.e. the network of function blocks, may be independent of the type of resource as different devices may be used as independent resources to host part of the network of function blocks. This is thanks to the event connections between function blocks.

### IMPROVEMENTS - IN GENERAL

In addition to system view, distribution, event execution and encapsulation as defined by the IEC 61499 standard to enable Interoperability, Configurability, Portability, and Top down engineering, it has been added functionalities concerning hardware abstraction; automatic generation of cross communication; Composite Automation Types CATs to support other Automation Aspects, IEC61131; HMI, Watch & Debug on distributed parts of the application and options for Alarms, Events and Archiving.

### COMPILATION

In order to enable hardware abstraction, that is a hardware agnostic development of an application to enable portability, it may be used a two-step compiling approach. In a first step, referred to as frontend compiling, each Basic function block is compiled from the programming language used to intermediate code..

Then a hardware architecture may be defined or selected on which the application is to be deployed, which means indicating which parts of the application are to be executed on which pieces of hardware. With transferring the application and all the Basic function block intermediate codes to the desired hardware a a so called backend compiler is used to compile the intermediate code into native code suited for the platform architecture. Hence, the various pieces of hardware may utilize different instruction sets, such as for example ARMv7, x86, etc..

In order to ensure that communication between I/O and the application made up of Function Blocks is maintained, a type of generic Service Interface Function Blocks is used to enable creating so called Symbolic links i.e. symlinks. In one embodiment this allows to map hardware signals to function blocks, regardless of the hierarchy of nested function blocks. This allows easier maintenance of communication links when executing the second step of the two-step compiling process, which is performed during deployment i.e. download to the respective devices.

### LIBRARIES

In general, libraries are mainly used to store various predeveloped function block types for later recurrent use in applications. Beside those, libraries may include device and/or resource types describing potential controllers which can execute applications. This descriptions may limit the use of specific services/functionalities or SFBs on certain device/resource types. Provided by manufacturers of the specific hardware those device types can even describe simple hardware, as e.g. autonomous sensors, variable speed drives and actuators to account for limitations of that specific hardware. For example, a humidity sensor cannot be expected to deliver a temperature value.

With the engineering tool, a particular type of library item referred to as a Composite Automation Type CAT is available that is dedicated to encapsulating various aspects beyond control logic of an object and integrate those seamlessly. In contrast to hierarchical approaches where, various aspects such as control, HMI, SCADA, MES and ERP are organized in hierarchy distinct from one another, requiring individually configured interfaces at each level of the hierarchy, the CAT encompasses these aspects in a single library object. This means that components and elements making up an automation system can each be represented in the engineering tool by a CAT.

Accordingly, the object may consist of elements, such as function blocks, faceplates and symbols, and of functions, such as an HMI, control, alarms etc. The details thereof may differ depending on the technical environment, e.g. material packaging handling, HVAC or waste water treatment, and therefor values and/or details of the elements and functions are stored in libraries. Hence, the Composite Automation Type CAT may include aspects related to hardware, as well as access and configuration, and aspects related to application, such as control, HMI, alarming.

To interface between the control aspect and other aspects as for example the visualization part, SIFBs like a HMI SIFB are added to the CAT control aspect. Such SIFBs represent with their Event and Data In- and Outputs the information the interface between for example the IEC 61499 runtime and the HMI runtime. Based on this interface definition other aspects can build their services executed in their specific Runtimes such as e.g. symbols and faceplates based on the capabilities of the .NET based HMI runtime.

Moreover, such CATs can also be used in a hierarchical way in a CAT-in-CAT structure to build more complex libraries out of basic ones including all different aspects of the CATs.

To sum up, the aspect of control logic (IEC 61499 Function Block network), visualization (with symbols and face plates), hardware connectivity (SYMLINK concept) and documentation (standardized HTML and docbook format) may be included within a CAT.

In other words, to allow integration of the visualization part, an HMI SIFB is added automatically to a CAT definition, which HMI SFIB represents the data and event interface between the IEC 61499 runtime and the HMI runtime. On top of this interface, symbols and face plates are created with the capabilities of .Net GUI applications. Moreover, CATs can be used in a hierarchical way, in a CAT-in-CAT structure.

### RUNTIME & EXECUTION MODEL

With an application build it becomes necessary to define how it will be executed or processed. As individual function blocks are event driven, meaning that the execution of the algorithm of the function block depends on events, the order of processing function blocks, meaning which & when a Function block is processed, requires also consideration.

For example, some vendors may apply a cyclic execution model, meaning that each function block executes once per cycle: sampling inputs, producing outputs. As a result, generated events may be processed by function blocks down in the per-cycle execution order, but function blocks higher up in the per-cycle execution order will not process the generated events until the next cycle. Secondly, no explicit association of data inputs with events is possible, meaning that each event will be associated with all data elements of a function block. Accordingly, cyclic execution requires a careful sorting of event-producers before event-consumers. And cycle loops require buffering to delay execution by one cycle. This approach allows to emulate IEC 61499 in a 61131 based runtime environment to provide backward-compatibility; at cost of loss of speed and flexibility.

It is possible to create applications that may comply with either the event-driven execution model or scan-based execution model. The execution model starts out with an event-driven approach. It aims to translate the application model description using the function block syntax and/or language into semantics suited for processing the Execution Control Charts and interconnections on a target PLC / PAC / microcontroller. Therefor the run-time environment arranges how to schedule events, function block execution and data transfer between them. However, an execution model also allows to create periodic events, such as every 20ms or 500ms, in order to execute in line with IEC 61131-3.

Such event-triggered scheduling means that a function block executes when the corresponding event occurs; and that may generate further events and trigger execution of further function blocks. Accordingly, this could result in a depth-first propagation of events, which would require queuing mechanisms to service events one at a time.

The synchronization of data and events becomes more critical if in a certain application execution involves simultaneous processing of multiple function blocks. This is shown in Fig. 1C wherein multiple Function blocks 102 and 104 are triggered by a single output event of function block 101. Considering the data ouput needs to be made available to multiple function blocks requires special handling within the runtime environment.

### SUMMARY OF INVENTION

It is an object of the invention to alleviate the complexity of designing an application program for an automation system using an engineering tool. And in particular, to alleviate the influence of the dependencies between function blocks and the need for synchronization.

According to one aspect, there is provided a run-time environment for execution of an event driven control program for a distributed control system comprising at least one computing resource, wherein the control program comprises at least two function blocks:
wherein the runtime environment is configured to execute each function block event driven when any of the each respectively function block associated trigger events occur;
wherein the runtime environment comprises for each computing resource an event executor which is configured for execution of sets of events and respective associated data on the respective computing resource;
wherein the runtime environment comprises for each function block a memory resource, which memory resource is configured to:
   store a set of events and associated data for each function block if the data is produced by the function block; and/or
store a reference to a set of events and associated data for each function block if the data is consumed by the function block.

In one embodiment, any of the at least two function blocks is a composite function block comprising multiple function blocks.

In one embodiment, the set of events and associated data is stored with a function block state in an instance memory.

In one embodiment, said reference corresponds to a set of datastructures held by the runtime environment for each input and output event and its associated data, representing the event and data connections between each function block.

In one embodiment, the computing resource contains a function block network composed of function blocks instances represented by instance memories, and event and data connections represented by datastructures inside the runtime environment.

In one embodiment, while executing, the corresponding instance memory for each function block holds and keeps a complete state of a function block instance over the whole lifetime of the function block.

In one embodiment, an instance memory is defined at least by all current values of input data, output data and internal variables.

In one embodiment, when one trigger event occurs for a function block, the runtime environment is configured to set binary values representing the event as well as the corresponding input data in the instance memory of the function block instance, and to execute an algorithm of the function block producing new output data in an internal buffer for the data output and marking new output events to be fired by setting the binary values representing the output event in the instance memory.

In one embodiment, the algorithm of the function block writes a value to an internal buffer of a respective output variable and when an output event associated with said value is fired, said value is copied from the internal buffer to an external buffer after the execution of the algorithm of the function block.

In one embodiment, the datastructure for each Input Event contains two variables, one variable Data Transfer To Queue DTTQ object describing what data is associated with an event that is to be put on the queue, the other variable Data Transfer From Queue DTFQ object describing what data should be copied where for an event that is to be executed.

In one embodiment, the variable DTTQ and DTFQ objects consist of a source or destination pointer, an offset in the event data structure and a function pointer to a cast and/or copy function.

In one embodiment, the runtime environment uses an eventqueue, which may be a ring buffer and stores the set of event datastructures scheduled for execution.

In one embodiment, the event datastructure contains the timestamp when the event is being queued and also a placeholder for a timestamp when the event is being executed.

According to another aspect, there is provided a method for creating an asset centric control model of a system application, comprising:
creating hardware agnostic functional model of assets of the application, the functional model comprising aspects for HMI, control, alarm, documentation, IT connection;
creating a composite application type, CAT, object comprising the aspects defined in the functional model for each asset;
representing each CAT object by a graphical function block;
deploying the graphical function blocks over platform resources available in the system; wherein platform resources may comprise ARM, Linux, and/or real-time controllers; and
providing each platform controller with a runtime environment.

According to another aspect, there is provided a method for execution of an application program.

According to yet another aspect, there is provided an engineering tool.

Further objects, aspects, effects and details of particular embodiments of the invention are described in the following detailed description of a number of exemplary embodiments, with reference to the drawings.

### BRIEF DESCRIPTION OF DRAWINGS

By way of example only, the embodiments of the present disclosure will be described with reference to the accompanying drawings, wherein:
FIG. 1A illustrates schematically an example of a function block according to IEC 61499;
FIG. 1B illustrates schematically an example of a function block in more detail according to IEC 61499;
FIG. 1C illustrates schematically an example of a network of function blocks in accordance with IEC 61499;
FIG. 2 illustrates schematically an example of an automation system for which a distributed control software application based on function blocks may be developed;
FIG. 3A illustrates schematically an example of data handling by function blocks in accordance with the invention;
FIG. 3B illustrates another example of function block internal data handling and an event queue in accordance with the invention;
FIG. 4 illustrates schematically a data structure for an Event Output Handle;
FIG. 5 illustrates schematically an example of a method for processing an event output;
FIG. 6 illustrates schematically an example of a data structure for an Event Input Handle;
FIG. 7 illustrates schematically an example of a method for processing an event input of a source function block;
FIG. 8 illustrates schematically an example of a method for creating an new event input for a target function block.

### DETAILED DESCRIPTION

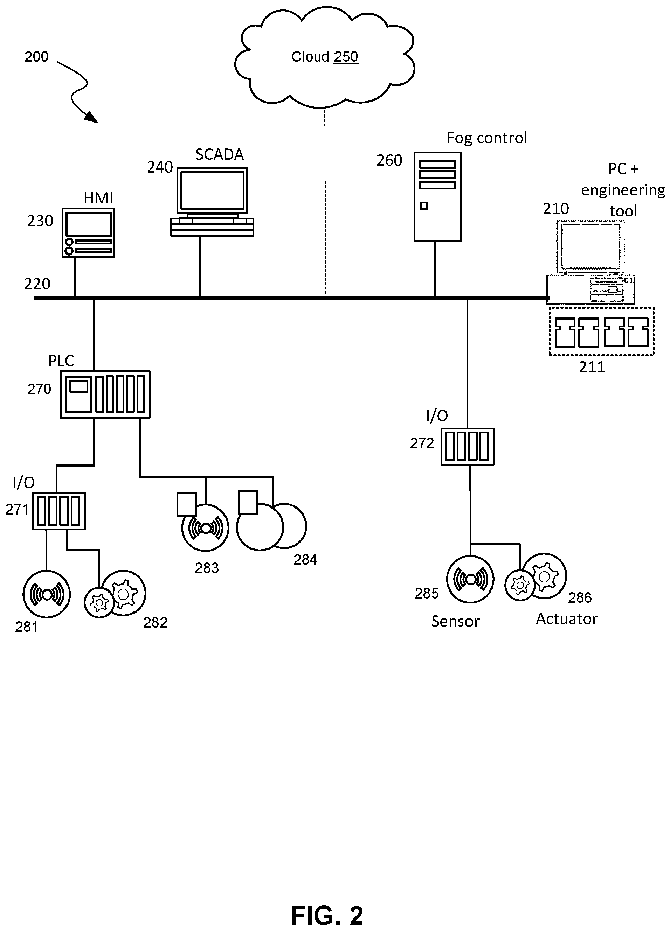

Referring to Fig. 2, an example of an automation system 200 is shown for which a control software application may be developed to implement and execute control of the system. The system 200 includes a PC running an engineering tool 210. The engineering tool 210 references libraries 211 containing a collection of function block types and libraries containing a collection of objects for various hardware components. A library may be dedicated to a specific field of technology, such as discrete manufacture, continuous process, water, hydraulics or HVAC, through which objects are available common to that particular field.

A central communication bus 220 connects the various elements of the system 200. On one side components for providing interaction of the operator with the system, such as an Human Machine Interface HMI 230, a SCADA System 240, a cloud platform 250, and a fog control server 260. On another side are automation hardware components, commonly referred to as edge or field devices, such as various sensors 281, 283, 285 and actuators 282, 284, 286 that are connected via I/O modules 271, 272 and a Programmable Logic Controller PLC 270 to the central communication bus 220. Sensor 281 and actuator 282 are connected via I/O module 271 to PLC 270, whereas sensor 283 and actuator 284 are connected to PLC 270 directly. Sensor 285 and actuator 286 are connected to I/O module 272. PLC 270 and I/O module 272 may communicate via central communication bus 220 with various systems for operator control, such as HMI 230 and SCADA System 240.

In the example of Fig. 2, the PLC 270, the I/O module 271 and I/O module 272 each have a processor capable of executing code. In addition, also the edge devices sensor 283 and actuator 284 are capable of executing code. In other examples, also one or more of the other edge devices such as sensors 281, 285 and/or actuators 282, 246 may be equipped with processing capabilities.

The Engineering tool 210 is used to design an application program at a functional level for the automation system 200, commonly referred to as an engineering phase. This includes taking in account parameters and measurements relevant to the particular process at hand. And engineering the operation of the complete system. The engineering phase further includes providing the necessary signals and control options for one or more operators and/or supervisors. The result will be a network of function blocks, referred to as an application, that performs the required functionalities when executed. A portion of an example of a network of function blocks is shown in Fig. 1C.

The engineered application, i.e. the network of function blocks will be compiled according to the two-step compiling process explained above. First creating intermediate code for each type of Function Block. Secondly creating code capable of being executed by specific hardware components available in the automation system 200. So, in this sense it may be said that the function blocks of the network are distributed over the processing resources available in the automation system 200.

Accordingly, a discovery process can be performed for identifying hardware resources with processing capacity. The hardware may also be pre-determined by an engineer or provided as a file listing the processing resources included in libraries. Processing resources may include dedicated physical hardware devices, smart devices including edge devices such as sensors and actuators equipped with generic CPU's, and virtual devices, such as virtual machines and/or containers. The use of virtual devices allows the use of a cloud computing infrastructure, which may be global and off-premise, such as cloud 250, or may be local and on-premise, such as fog 260.

In order to represent the various elements of the system in the engineering tool, including hardware, processing resources and/ or virtual resources, each element should be defined and described using respective library objects. This means that for each element of the system the control logic, visualization, connection and documentation are to be provided as aspects and made available within each respective library object. Hence, for each type of system element there should be a library object.

So, during the engineering phase, an engineer will design an application that is to be run and distributed over execution resources making up the automation system 200. This is done by selecting and connecting instances of library objects representing the respective elements of the automation system.

### EVENT SCHEDULER and MEMORY STRUCTURE

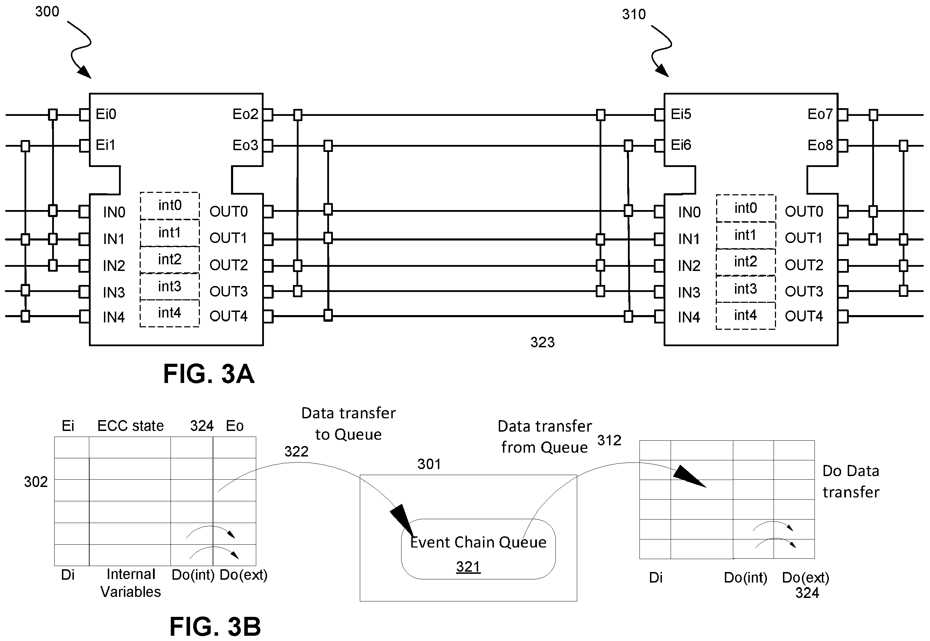

With reference to Figs.3A and 3B, the inner structure and operation of the Runtime environment for execution of an event driven control program for a distributed control system will be explained. The Runtime includes at least one computing resource and the control program includes at least two function blocks 300, 310. The runtime environment is configured to execute each function block 300, 310 event driven when any of the trigger events respectively associated with each function block occurs. Thereto, the runtime environment includes for each computing resource a scheduler 301, such as e.g. an event execution thread, which is configured for execution of sets of events with respective associated data on the respective computing resource.

The computing resource therefore contains a function block network composed of function blocks instances, Event and Data connections represented by specific memory structures inside the runtime environment.

While executing, the corresponding instance memory 302, 312 for each function block 310, 320 holds and keeps the complete state of the function block instance over the whole lifetime of the function block. Thus instance memory is defined by all current values of the Input Data IN(n), Output Data OUT(n) and Internal Variables INT(n). Additionally for a Basic function block the instance memory keeps the current State of the ECC and memory representation of each Input Event EI(n) and each Output Event EO(n) in form of a binary value in case of a Basic function block. Additionally to the instance memory the runtime environment keeps a set of datastructures so called Event Input Handles EIH for each Input Event and respectively Event Output Handles EOH for each Output Event. These handles represent the Event and Data connections between each function block and it's Event/Data association of the FBs Interface. The datastructures are designed in a way to allow efficient transfer of data and events between the function blocks by the Executor. For this purpose they get created and filled once at application setup time and used during execution.

In one embodiment, the internal state of the function block may be represented by a set of events and associated data, which is stored in a memory resource as an instance of the internal state 302, 312. Such set of events and data may include values for incoming events Ei0 and Ei1, values for outgoing events Eo2 and Eo3, values for input data IN0-IN4, values for output data Out0 - Out4, and sets of values for internal data int0 - int4, such as output data Out0 - Out4 calculated and to be exposed with a next output event.

In one embodiment, the inputs IN0 - IN4 and outputs OUT0-OUT4 may be described as variables IN(n) with index n = 0, 1, 2, ... and OUT(n) with index n = 0, 1, 2, ... Similarly, the input events and output events may be described as variables Ei(n) with index n = 0, 1, 2, ... and Eo(n) with index n = 0, 1, 2, ...

In one embodiment, the runtime environment may further include an instance memory 302, 312 for each function block 300, 310. Each instance memory 302, 312 is configured to store sets of events and associated data and/or store a reference to another set of events and associated data. This depends on whether the current trigger event will be producing data and/or a next event. Or if the current trigger event will be consuming data and/or a previous event. So, based on the event trigger being event-producing or event-consuming, the memory resource 302, 312 may store the set of events and associated data for each function block if the data is produced by the function block. And/or it may store a reference to a set of events and associated data for each function block if the data is consumed by the function block.

When one trigger event occurs for the first function block 300, Ei0 or Ei1, the runtime will set the binary value representations of the Event as well as the associated Input Data in the instance memory of the function block instance. Followed by executing the algorithm of the function block producing new output data in the internal buffer of the Data Output Do(int) and marking new Output Events to be fired by setting the binary value representations of the Output Events in the instance memory.

With this referenced approach it is possible to use different cores for executing parallel branches of linked function blocks.

In accordance with the IEC 61499 paradigm an output data variable, e.g. like OUT0 - OUT4, should only be updated, meaning presented external i.e. exposed outside of a function block if the associated output event, e.g. Eo2 or Eo3, is fired. For example, inside a basic function block algorithm, a new value may be obtained for the output variable, but if no associated event is fired when the algorithm finishes, the already exposed output data variable should retain the old value. As a connected input data variable, meaning an input variable of another function block that is connected to this output data variable, should continue to read the old value. As a result, in the runtime environment, new values of output variables should be buffered. This achieved which is achieved by storing both the newly obtained values OUT0-4 as Do(lnternal) and the currently exposed values OUT0-4 as Do(External). Accordingly, the function block algorithm writes to the internal buffer of the respective variable, and when the associated output event is fired, the value is copied from the internal buffer Do(int) to the external buffer Do(ext) after the execution of the algorithm.

In case of a composite function block, the internal buffer will be equivalent to the connected (external) output variable of a member function block instance. Therefore the internal buffer for composites is not present. As an adaption, a composite function block may only update the output variables in response to a triggering of the associated output events, no double buffer is required inside a composite function block.

In the following, the handling of data within a function block network and use of an event queue will be described in more detail.

### HANDLING OUTPUT EVENTS

Starting with the output data side i.e. the data that is to be exposed, an example of a data structure and the handling of data will be described when one of the output events is triggered, e.g. from an Execution Control Chart ECC or algorithm of a basic function block or from events coming from an internal function bock inside a composite function block.

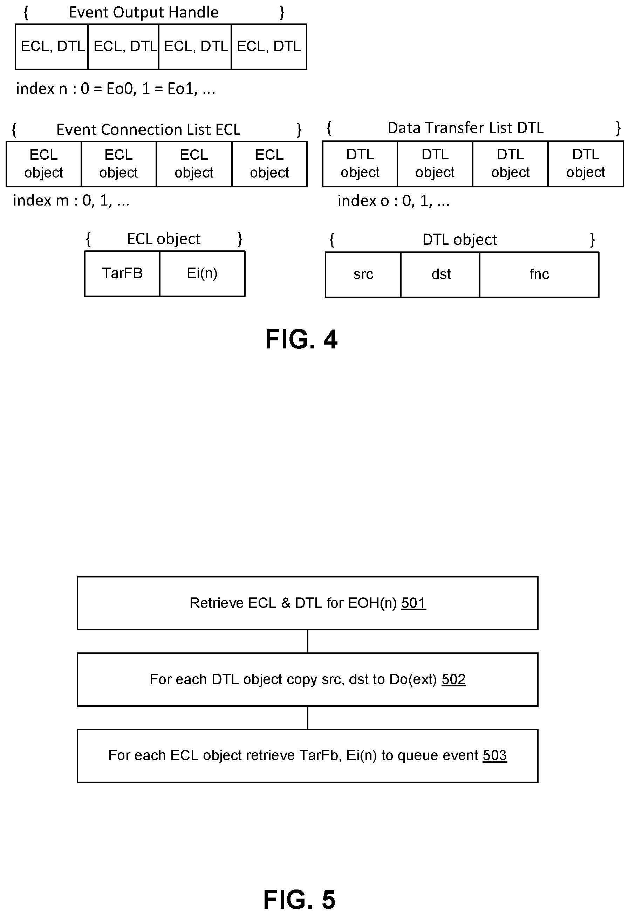

When the output event is fired, the function block instance looks up its variable Event Output Handle, which is an array referred to as EOH(n), where n is the index for the output event being fired, so n = 0 refers to Eo(0) and n = 1 refers to Eo(1). Each object in the array EOH(n), contains two variables, one variable Event Connection List ECL containing the connection between events, the other variable Data Transfer List DTL containing the output data variables associated with the output event. See Fig. 4.

The Event Connection List ECL is an array of objects with each array object describing one event connection, which includes a pointer to the target function block instance TarFB and it includes the input event index EvtID, e.g. Ei1 or Ei6, that the output event is connected to. See Fig. 4.

The Data Transfer List DTL is an array of objects with each array object describing one output data variable that is associated with the output event. Each array object contains two data pointers, a source pointer src and a destination pointer dst, and a function pointer fnc describing which function should be called to handle the datatype: a casting function or a memory copy function. For an output data transfer between the internal and external buffer of a function block, it will always be a memory copy and no cast will be possible. See Fig. 4.

Referring to Fig. 5, with the data structure as explained, when a scheduler i.e. event executor fires one of the output events, the following actions will be performed.

For the output event Eo(n), the respective Event Connection List and Data Transfer List will be retrieved 501 from the Event Output Handle EOH(n).

Next, within the Data Transfer List for the respective output event the associated array objects are identified and the source pointer src, destination pointer dst and function pointer fnc are retrieved 502 in order to copy the output variables from the internal buffer to the external buffer 324. For a composite function block this is representing the copy of the external buffer Do(ext) of the connected member function block to the external buffer Do(ext) of composite.

Furthermore, within the Event Connection List for the respective output event the associated array objects are retrieved 503 identified and the target function block, TarFB, and event identifier i.e. event, ID Ei(n), are used to trigger a relevant method on the target function block instance to create and to put an event onto the event queue 503.

### QUEUEING AN EVENT

The target function block instance triggered by the corresponding TarFB and event ID Ei(n) from the Event Connection List, retrieves a variable Event Input Handle, which is an array referred to as EIH(n), where n is the index for the input event being fired, so n = 0 refers to Ei(0) and n = 1 refers to Ei(1). Each object in the array EIH(n), contains two variables, one variable Data Transfer To Queue DTTQ object describing what data is associated with an event that is to be put on the queue, the other variable Data Transfer From Queue DTFQ object describing what data should be copied where for an event that is to be executed. Both objects DTTQ and DTFQ basically describe the connection between destination input variable IN(n) and associated input event Ei(n).

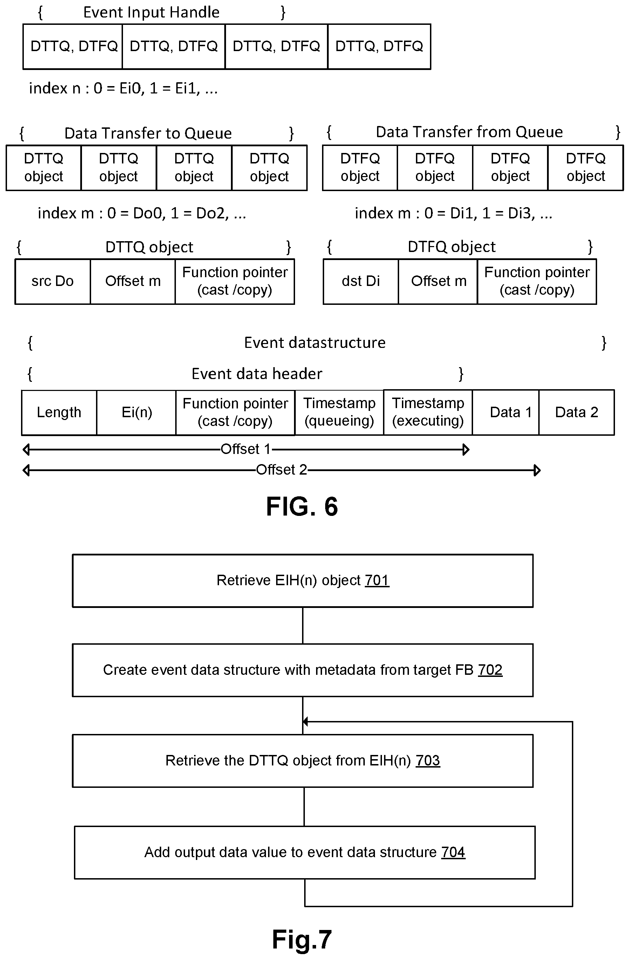

The variable Data Transfer To Queue DTTQ is an array, see Fig. 6, wherein each array element i.e. DTTQ object contains a source pointer src Do which points to the memory location of the external buffer of the output data variable of the source function block for this data connection. Each array element further contains an offset variable describing an offset m of each data value in the event data structure for Event Input n. In this context, it may mean that the value format is not uniquely defined, but that the type may be one of various value data representations. This offset m is pre-calculated during application setup time, so no time is wasted on calculation during event execution. This means that for each event the memory location may directly be retrieved. Each array element further contains a function pointer castFct describing the datatype casting function or memory copy function that is to be called. This cast function is executed if there's an type cast between the source and destination of this data connection, otherwise it will be a simple memory copy function. Type cast means that a variable having a certain type may be converted to another type, like e.g. from an Integer type to a floating point type or string type. A cast function may also be required in case of data types with different bit width or length. More of such various kinds of data types are e.g. defined in the standard IEC 61499, which in turn may refer again to IEC61311.

Similar to the variable DTTQ, the variable Data Transfer From Queue DTFQ is likewise an array, see Fig. 6, wherein each array element i.e. DTFQ object contains a destination pointer dst Di which points to the memory location of the input data variable of the destination function block for this data connection. Each array element further contains a unionized offset variable describing the same offset of the respective data variable inside the event datastructure. This offset m is also pre-calculated for each data associated with the Event n during application setup time, so no time is wasted on calculation during event execution. Each array element further contains a function pointer castFct describing the datatype casting function or memory copy function that is to be called.

In other words, the variables DTTQ and DTFQ consist of a source or destination pointer, an offset in the event data structure and a function pointer to a cast and/or copy function.With the data structures as described above, the scheduler i.e. event executor may queue the event that is to be executed in an event queue which may be a ring buffer and stores the set of event datastructures scheduled for execution, and which e.g. was identified by retrieving 503 TarFb and Ei(n) from the ECL. While referring to Fig. 7, this is done by performing the following:
Retrieving the EIH(n) object 701 by looking up the target function block's Event Input Handle EIH(n) with n the identifier of the input event that is triggered.

Creating the event data structure 702 on the event queue, which may e.g. be a ring buffer, and fill in the metadata in the event header. The metadata may include the length of the event, destination input event identifier Ei(n), pointer to target function block and the timestamp when the event is being queued and also a placeholder for a timestamp when the event is being executed.

Retrieving 703 from the Event Input Handle EIH(n) object, the Data Transfer To Queue DTTQ array.

For each DTTQ object m of the DTTQ array retrieving the source pointer src Do, the offset m and the function pointer castFct.

Adding the output variable value 704, based on the function pointer either by type cast or copy, to the proper place in the event data structure as indicated by offset m.

### EVENT EXECUTION

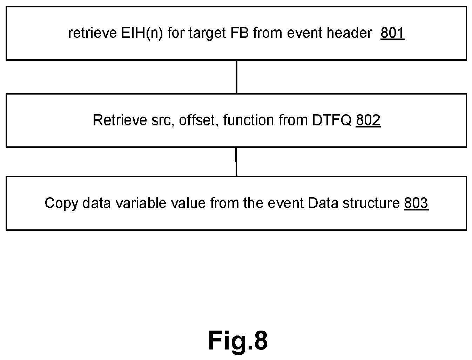

Event execution means that the scheduler i.e. event executor takes an event datastructure from the queue and uses the metadata from the event header to identify the target function block and respective Input Event to be executed Accordingly, the scheduler will perform actions prior to algorithm execution to put the data of one event data structure at the proper memory location associated with each function block instance. While referring to Fig. 8, this is done by performing the following method:
Retrieving 801 the event datastructure of the currently scheduled event from the event queue.

Retrieving 801, based on the event input ID Ei(n) of the event header, the destination function blocks' Event Input Handle EIH(n) objects with n the Event Input ID Ei(n) of the input event that is fired.

Retrieving 802 the DTFQ array from the retrieved EIH(n) for Input Event n. For each DTFQ object retrieving the pointer pointing to the Input Data Variable dst Di, the offset m pointing to the data value in the event data structure and the function pointer castFct.

Copying 803 the data variable value from the event data structure to the correct memory location for the input data variable Ei(n).

Executing 803 the function block algorithm according to the definition of the ECC, it's current ECC state and the Input Event being triggered and filling the timestamp into the event datastructure header when the event is being executed

By performing the above actions, the scheduler executes one of the events that was queued. And execution would continue by performing the next event in the queue.

In a distributed system having multiple resources, each resource will have an event executor which is implemented as an event executor thread. This one event executor thread per resource is responsible for performing the actions as described above: transferring events and data from the source function block to the destination function block and then execute the algorithm(s) or other logic of the destination function block.

This thread runs continuously, checking if the event queue is empty, and if it is not empty, the executor takes the first event out of the event queue and uses the information contained in the event header to find the destination function block and starts to copy the data attached to the event to the associated input data variables of the destination function block. Once all the values of the input data variables have been set, the executor then executes the one or more relevant algorithms inside the function block instance that correspond to the input event ID. The executor may arrange calling of algorithm associated with a certain function block that is required to calculate the output data from the input data.

This execution of one event in turn may or may not queue new events to the event queue. Therewith the execution of one event is completed and the timestamp for execution time is filled in the metadata of the eventheader. The executor thread will then continue by checking for the next event in the queue and execute it if the queue is not empty. If the event queue is empty, the thread is then suspended, put to sleep, until a service thread like e.g. network socket wakes up the event executor thread again by queuing a new event, with which the executor thread resumes event execution.

Timestamping the queuing time as well as the execution time of the event as part of the event datastructure header allows advanced tracing of the temporal execution behavior of the function block network. This can be used to watch and monitor execution times while executing.

Moreover, a recording of this event queue datastructure can be used for offline diagnosis after an application error lead to some unexpected behavior of the user application.

In one embodiment, a recording of the event queue containing all the event datastructures and therefore the queuing and execution times of all function blocks can be used to determine the sequence of executed function blocks. Moreover, the recorded timestamps allow to analyze the exact behavior of the application in a timely manner.

Moreover, such a recording can be stored by the occurrence of a certain error to allow an analysis afterwards to identify the original cause of such an error.

## Claims

1. A runtime environment for execution of an event driven control program for a distributed control system comprising at least one computing resource, wherein the control program comprises at least two function blocks:
wherein the runtime environment is configured to execute each function block event driven when any of the each respectively function block associated trigger events occur;
wherein the runtime environment comprises for each computing resource an event executor which is configured for execution of sets of events and respective associated data on the respective computing resource;
wherein the runtime environment comprises for each function block a memory resource, which memory resource is configured to:
store a set of events and associated data for each function block if the data is produced by the function block; and/or
store a reference to a set of events and associated data for each function block if the data is consumed by the function block.

2. A runtime environment according to claim 1, wherein any of the at least two function blocks is a composite function block comprising multiple function blocks.

3. A runtime environment according to any of previous claims, wherein the set of events and associated data is stored with a function block state in an instance memory.

4. A runtime environment according to any of previous claims, wherein said reference corresponds to a set of datastructures held by the runtime environment for each input and output event and its associated data, representing the event and data connections between each function block.

5. A runtime environment according to any of previous claims, wherein the computing resource contains a function block network composed of function blocks instances represented by instance memories, and event and data connections represented by datastructures inside the runtime environment.

6. A runtime environment according to any of claims 3 to 5, wherein while executing, the corresponding instance memory for each function block holds and keeps a complete state of a function block instance over the whole lifetime of the function block.

7. A runtime environment according to any of claims 3 to 6, wherein an instance memory is defined at least by all current values of input data, output data and internal variables.

8. A runtime environment according to any of claims 3 to 7, wherein when one trigger event occurs for a function block, the runtime environment is configured to set binary values representing the event as well as the corresponding input data in the instance memory of the function block instance, and to execute an algorithm of the function block producing new output data in an internal buffer for the data output and marking new output events to be fired by setting the binary values representing the output event in the instance memory.

9. A runtime environment according to claim 8, wherein the algorithm of the function block writes a value to an internal buffer of a respective output variable and when an output event associated with said value is fired, said value is copied from the internal buffer to an external buffer after the execution of the algorithm of the function block.

10. A runtime environment according to claim 4, wherein the datastructure for each Input Event contains two variables, one variable Data Transfer To Queue DTTQ object describing what data is associated with an event that is to be put on the queue, the other variable Data Transfer From Queue DTFQ object describing what data should be copied where for an event that is to be executed.

11. A runtime environment according to claim 10, wherein the variable DTTQ and DTFQ objects consist of a source or destination pointer, an offset in the event data structure and a function pointer to a cast and/or copy function.

12. A runtime environment according to claim 1, wherein the runtime environment uses an eventqueue, which may be a ring buffer and stores the set of event datastructures scheduled for execution.

13. A runtime environment according to claim 12, wherein the event datastructure contains the timestamp when the event is being queued and also a placeholder for a timestamp when the event is being executed.
